# EUROPÄISCHE PATENTSCHRIFT

(11) **EP 3 112 245 B1**
(45) Veröffentlichungstag und Bekanntmachung des Hinweises auf die Patenterteilung: **20.01.2021**
(21) Anmeldenummer: 16176543.3
(22) Anmeldetag: 28.06.2016
(51) Int. Cl.: B62M 6/40, B62K 3/00, B62K 5/05, B62K 5/08, B62M 1/12

(54) **FAHRBARES TRAININGSGERÄT FÜR DIE KÖRPERLICHE ERTÜCHTIGUNG**
MOBILE TRAINING DEVICE FOR PHYSICAL EXERCISE
APPAREIL D'ENTRAÎNEMENT POUR LE RENFORCEMENT CORPOREL

(30) Priorität: 30.06.2015 CH 9392015
(43) Veröffentlichungstag der Anmeldung: 04.01.2017
(73) Patentinhaber: Balson AG, 8260 Stein am Rhein (CH)
(72) Erfinder: Ball, Charles, 8259 Wagenhausen (CH)
(74) Vertreter: Gachnang, Hans Rudolf

(56) Entgegenhaltungen:
- WO-A1-2008/032969
- US-A- 617 578
- US-A- 2 510 013
- US-A- 3 921 464
- US-A- 4 903 857
- US-A1- 2010 230 924
- US-A1- 2014 306 423
- US-B1- 6 572 129

## Beschreibung

Gegenstand der Erfindung ist ein fahrbares Trainingsgerät für die körperliche Ertüchtigung gemäss Patentanspruch 1. In vielen Kellern oder Hobbyräumen von Privathäusern sowie in Fitnesscentern stehen Trainingsgeräte für die körperliche Ertüchtigung der menschlichen Muskulatur. Die meisten dieser Geräte sind einseitig ausgerichtet auf einen bestimmten Muskel- oder Körperbereich. So dienen Rudergeräte vorwiegend der Ertüchtigung der Bauch- und Armmuskulatur, andere Geräte der Beinmuskulatur usw.

Solche Geräte erfüllen ihren Zweck; sie sind aber für den Benutzer oder Trainierenden insofern mühsam, als diese Trainingsübungen irgendwo in einem Keller oder in einem Fitnesszentrum und zudem neben anderen Besuchern vorgenommen werden muss. Zudem ist in solchen Fitnesscentern die Luft meist nicht derart angenehm, dass eine körperliche Ertüchtigung, bei dem auch der Sauerstoffbedarf sehr stark ansteigt, Freude bereiten kann.

Alternativ zu stationären Trainingsgeräten sind zum Beispiel Fahrräder herkömmlicher Bauart oder dreirädrige Fahrräder, bei denen der Fahrer halb liegend auf dem Fahrrad sitzt, bekannt. Bei Fahrrädern mit zwei Rädern und auch solchen mit drei Rädern kann ein Training ausserhalb der eigenen vier Wände und insbesondere nicht in Räumen, wo eine grosse Anzahl weiterer Leute schwitzend der Ertüchtigung nachgehen, durchgeführt werden. Auch Zwei- oder Dreiradfahrräder haben den Nachteil, dass die Ertüchtigung fast ausschliesslich entweder der Bein- oder Armmuskulatur und allenfalls noch der Bauchmuskulatur dient. Werden die Antriebsorgane für die Arme auch zum Lenken des Fahrrades benutzt, so ist eine Geradeausfahrt, wie sie auf der Strasse zwingend ist, kaum möglich.

Aus der gattungsgemäßen US 6,572,129 B1 ist ein Dreirad bekannt, bei welchem der Fahrer oder die Fahrerin mit zwei Fusspedalen und einer Kette das Hinterrad antreiben kann. Zusätzlich kann über zwei miteinander verbundenen Griffen an einer Lenkstange über eine Kette, die auf die Pedalwelle wirkt, durch Zugbewegungen zusätzlich Vortrieb geschaffen werden. Die Mithilfe beim Antrieb durch die Lenkstange beschränkt sich also nur auf gemeinsame Zugbewegungen an den Handgriffen und zudem gegen die Kraft einer Feder, welche die Lenkstange jeweils wieder an den Ausgangspunkt zurückbringt. Durch die Betätigung der Lenkstange auch als Antrieb ist es nicht möglich, eine gerade Fahrt zu bekommen, da beim Ziehen die Hebel nicht linear geführt sind und so die Fahrt eine Schlangenbewegung bewirkt. Die Lenkbewegung wird über Bowdenzüge übertragen, welche, mehrmals umgelenkt einen eher grossen Widerstand erzeugen, das heisst sehr viel Kraft aufgewendet werden muss, um eine Vorwärtsbewegung zu erlangen.

Im Weiteren müssen immer beide Betätigungshebel gleichzeitig und jeweils in gleicher Richtung betätigt werden, das heisst es ist nicht möglich, den einen Hebel nach vorn und dem andern Hebel nach hinten zu bewegen, was an sich eine natürliche Bewegung für den Menschen ist, das Gerät zu betätigen. Auch ist es nicht möglich, mit nur einer Hand einen Hebel zu betätigen und den anderen nicht. In der DE 10 2005 008 890 wird ein ergonomisches Dreirad mit Ruderantrieb und Kettenlenkung offenbart. Dieses umfasst einen Pedalantrieb für die Beine, mit dem die Hinterräder angetrieben werden können. Mit zwei an einer vertikalen Welle befestigten Handgriffen kann zusätzlich Antriebskraft auf die von der Pedalwelle zum Hinterrad verlaufende Kette übertragen werden. Wie bei der erstgenannten Schrift kann die Kraftübertragung nur durch eine Zugbewegung erfolgen, an die nachschliessend eine Leerbewegung nach vorne anschliessen muss.

Aus der weiter bekannt gewordenen US 2,510,013 ist ein Fahrrad bekannt, bei dem in herkömmlicher Weise über zwei Pedale das Hinterrad mit einer Kette angetrieben wird. Zusätzlich können die beiden Lenkerhälften, die um eine zentrale Achse schwenkbar sind, durch Vor- und Rückbewegung der Lenkerhälften über ein Gestänge auf die Tretlagerwelle zusätzlich Kräfte auf das Hinterrad führen. Gleichzeitig die Lenker als Antrieb und als Lenkmittel zu benutzen, erscheint nicht möglich.

Eine Aufgabe der Erfindung besteht nun darin, ein Trainingsgerät zu schaffen, welches ein breiteres Spektrum an Ertüchtigungsmöglichkeiten verschiedener Muskulaturen des menschlichen Körpers ermöglicht und es zudem erlaubt, in der freien Natur bei guter Luft der Ertüchtigung nachzugehen.

Gelöst wird diese Aufgabe durch ein fahrbares Trainingsgerät gemäss Patentanspruch 1. Vorteilhafte Ausgestaltungen des Trainingsgeräts sind in den abhängigen Ansprüchen umschrieben.

Eine weitere Aufgabe der Erfindung besteht darin, die Bewegung der Beine und der Arme völlig unabhängig voneinander vorzunehmen, das heisst das Gerät nur mit den Beinen anzutreiben oder mit einem oder mit beiden Armen oder synchron beide Arme nach vorne, beide Arme nach hinten oder einzeln.

Mit dem erfindungsgemässen Trainingsgerät kann der Trainierende in der freien Natur seine körperliche Ertüchtigung vornehmen und, falls das Wetter dies nicht zulässt, es trotzdem auch in den eigenen vier Wänden auf einer bremsbaren Rolle tun. Das Trainingsgerät dient folglich nicht nur der körperlichen, das heisst der physischen Ertüchtigung, sondern gleichzeitig und ohne weiteren zusätzlichen Aufwand auch dem psychischen Wohlergehen, was in einem Fitnessraum kaum möglich ist. Die Ertüchtigung der einzelnen Muskeln kann wahlweise einzeln erfolgen, beispielsweise werden nur die Bein- und allenfalls damit etwas die Bauchmuskulatur gestärkt oder es werden nur die Arm- und teilweise auch die Bauchmuskulatur gleichzeitig trainiert. Ohne Weiteres und fast automatisch können aber alle diese Muskulaturen gleichzeitig trainiert werden. Es kann folglich eine gesamtheitliche Ertüchtigung erfolgen. Nebst der Ertüchtigung der Muskulatur kann dieses Trainingsgerät auch als Fahrrad in herkömmlicher Weise dienen, mit dem Kommissionen oder ein Ausflug gemacht werden oder zur Arbeit gefahren werden kann.

Für Benutzer des Trainingsgeräts im fortgeschrittenen Alter kann am Trainingsgerät auch ein Hilfsantrieb (E-Motor) angeordnet sein, um beispielsweise nach einer längeren Fahrt die Rückreise zum Ausgangspunkt zu erleichtern oder bei einer zu grossen Steigung einer Strasse, die eigenen Kräfte zu unterstützen, wobei gleichzeitig der Fahrer oder die Fahrerin soweit als möglich die Fahrt unterstützt, das heisst weiterhin die Arme oder Beine in Bewegung hält.

Anhand eines illustrierten Ausführungsbeispiels wird die Erfindung näher erläutert. Es zeigen:
- Figur 1: eine perspektivische schematische Ansicht eines fahrbaren Trainingsgeräts,
- Figur 2: einen vergrösserten Ausschnitt des Antriebs- und Lenkbereichs der Antriebslenker,
- Figur 3a: eine perspektivische Ansicht der Antriebseinheit von links in Figur 2,
- Figur 3b: eine Ansicht des Betätigungshebels und der Betätigungsstange,
- Figur 4: eine perspektivische Aufsicht auf das Lenkgetriebe,
- Figur 5: eine perspektivische Ansicht des Antriebshebels des Lenkgetriebes,
- Figur 6: eine perspektivische Darstellung des Antriebshebels des Lenkgetriebes,
- Figur 7: eine schematische Darstellung des Lenkgetriebes von oben und
- Figur 8: eine schematische Darstellung einer Totpunktüberwindungsvorrichtung.

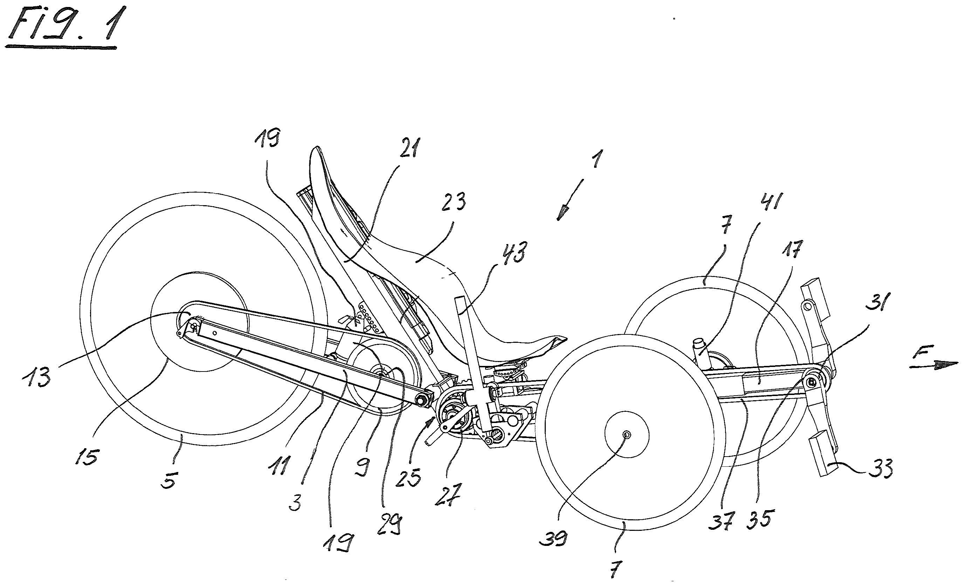

In der Übersichtsdarstellung in Figur 1 ist das Trainingsgerät mit Bezugszeichen 1 bezeichnet. An einer Hinterradschwinge 3 ist links schematisch ein Hinterrad 5 angeordnet. Rechts in der Figur 1 sind zwei Vorderräder 7 dargestellt. Das Hinterrad 5 ist über ein erstes Kettenrad 9 in herkömmlicher Weise mit einer Kette oder einem Zahnriemen 11 und einem zweiten Kettenrad 13 auf der Nabe des Hinterrads 5 antreibbar. Alternativ oder zusätzlich kann auf der Nabe am Hinterrad 5 ein E-Motor 15 eingesetzt sein. Alternativ kann der E-Motor 15 auch an einem vorderen Laufrad 7 oder am Fahrgestell 17 in Verbindung mit dem ersten Kettenrad 9 eingesetzt sein. Die Hinterradschwinge 3 ist an ihrem vorderen Ende an einem Fahrgestell 17 angelenkt und durch eine Federdämpfeinheit 19 gefedert und schwenkbar mit dem Fahrgestell 17 verbunden. An einer vom Fahrgestell 17 nach oben wegragenden Stütze 21, an welcher auch die Federdämpfeinheit 19 befestigt sein kann, ist ein Schalensitz 23 aufgesetzt. Unterhalb des Schalensitzes 23, der in Fahrtrichtung F verstellbar ist, ist am Fahrgestell 17 ein Zentralgetriebe 25 angeordnet. Vom Zentralgetriebe 25 weg führt ein Antriebsriemen (nicht sichtbar) zum ersten Kettenrad 9 bzw. zur Welle 29, auf der das erste Kettenrad 9 gelagert ist.

Am vorderen Ende des Fahrgestells 17 ist ein Tretlager 31 mit zwei Pedalen 33 angeordnet. Vom Tretlager 31 bzw. einem darauf gelagerten Ritzel 35 führt eine Antriebskette 37 oder ein Antriebsriemen zum Zentralgetriebe 25 und umschlingt dort ein entsprechendes Kettenrad 27. Alternativ zu einer Kette kann selbstverständlich auch ein Keil- oder Zahnriemen 37 eingesetzt sein.

Die beiden Vorderräder 7 sind am Fahrgestell 17 schwenkbar auf je einer Welle 39 gelagert. Sie können zudem an einem Federelement 41 federelastisch und gedämpft mit dem Fahrgestell 17 verbunden sein.

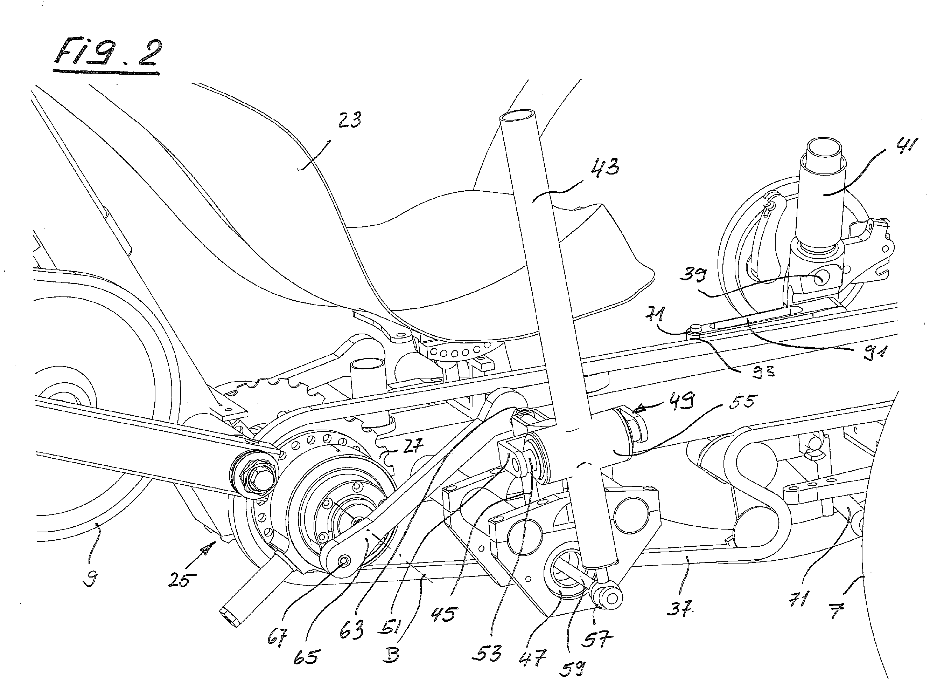

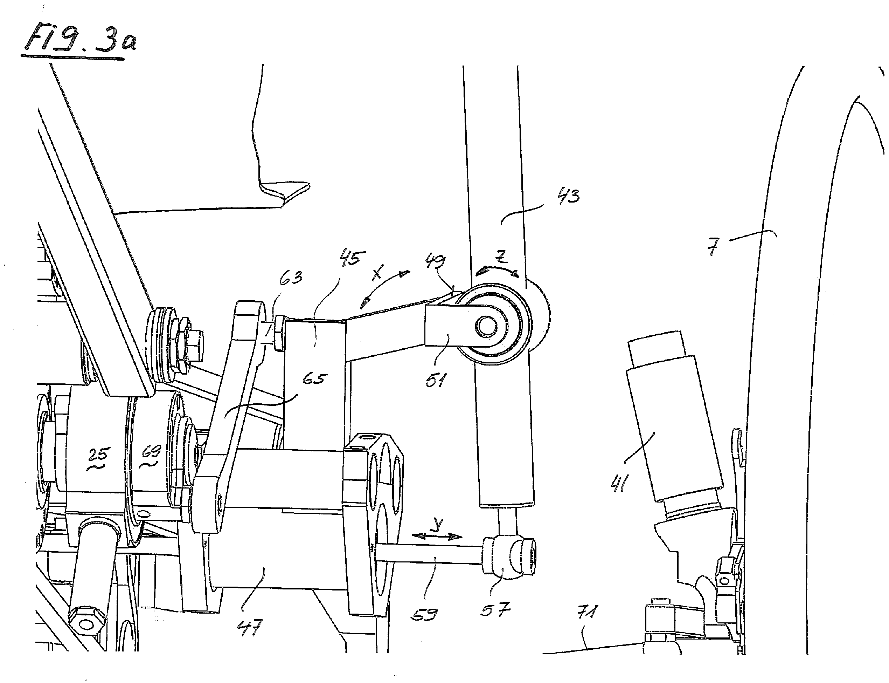

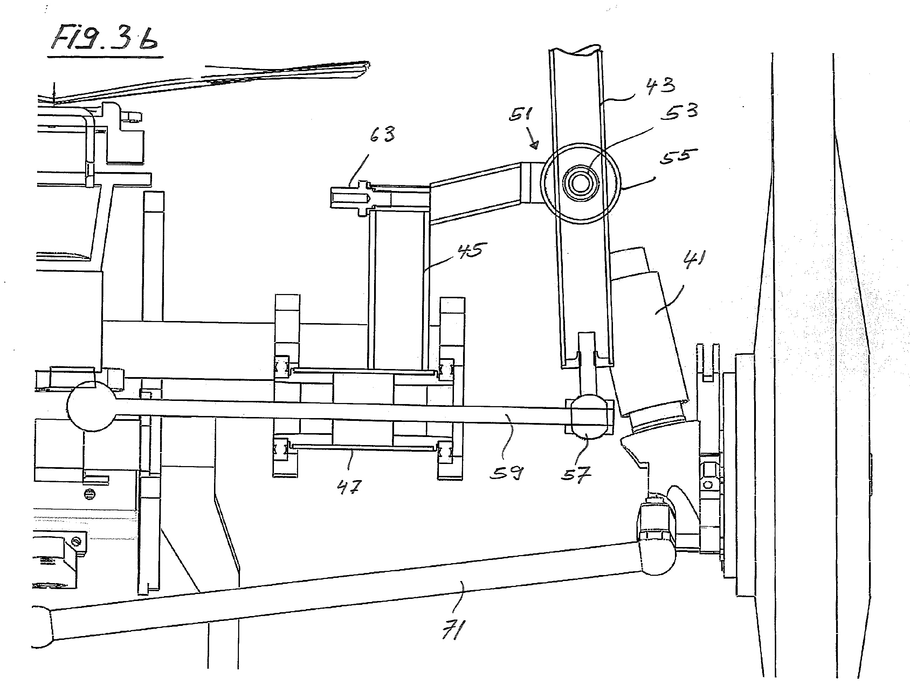

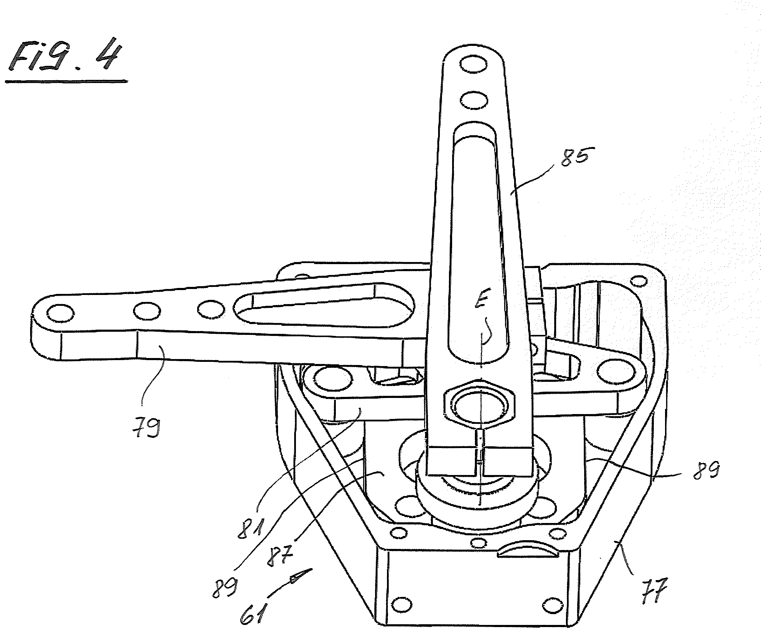

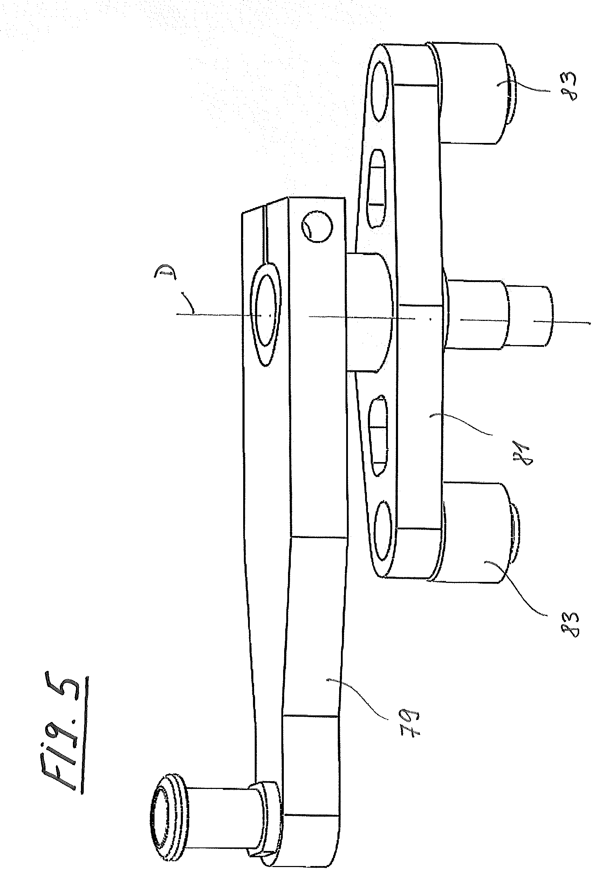

Anhand der Figuren 2, 3a und 3b wird der Handantrieb des Trainingsgeräts 1 mit zwei links und rechts des Schalensitzes 23 angeordneten Betätigungshebeln 43 beschrieben. Die beiden Betätigungshebel 43 sind gelenkig an einem Schwenkhebel 45 gelagert. Das untere Ende des Schwenkhebels 45 ist auf einem Rohr 47 gelagert, welches Rohr 47 am Fahrgestell 17 befestigt ist. Am oberen Ende des Schwenkhebels 45 ist ein U-förmiger Haltebügel 49 angeordnet, auf dessen beiden Schenkeln 51 eine Schwenkwelle 53 sitzt. Auf der Schwenkwelle 53 ist eine Lagerbüchse 55 drehbar aufgesetzt, welche Lagerbüchse 55 den Betätigungshebel 43 trägt bzw. von diesem durchdrungen wird. Der oberhalb der Lagerbüchse 55 liegende Abschnitt des Betätigungshebels 43 trägt an seinem oberen Ende einen ergonomischen Griff für die Hand einer auf dem Trainingsgerät 1 trainierenden Person. Der Griff und die Hand sind nicht dargestellt. Der unterhalb der Lagerbüchse 55 liegende Bereich des Betätigungshebels 43 trägt auf seinem Ende ein Kreuz- oder Kugelgelenk 57. Das Kreuz- oder Kugelgelenk 57 verbindet den Betätigungshebel 43 mit einer Betätigungsstange 59. Letztere führt aus und überträgt Schwenkbewegungen des Betätigungshebels 43 in Richtung der Pfeile Y auf ein Lenkgetriebe 61, welches am Fahrgestell 17 zentral angeordnet ist (Fig. 4 und 5). Die Betätigungsstange 59 bewegt sich im Wesentlichen axial und rechtwinklig zur Längsausdehnung des Fahrgestells 17. Die durch den minimalen bogenförmigen Verlauf der Bewegung des Kreuz- oder Kugelgelenks 57 werden am Lenkgetriebe 61 aufgenommen. Die Betätigungsstange 59 bzw. deren Achse verläuft innerhalb des Rohrs 47, auf welchem der Schwenkhebel 45 an seinem unteren Ende schwenkbar gelagert ist. Eine Schwenkbewegung des Betätigungshebels 43 in Richtung der Pfeile X, das heisst in Fahrtrichtung F vor- oder rückwärts, lenkt den Schwenkhebel 45 entsprechend aus. Zusammen mit dem Schwenkhebel 45 schwenken auch die Lagerbüchse 55 und der U-förmige Bügel 49 mit dessen Schenkeln 51.

Am oberen Ende des Schwenkhebels 45 ist auf einem Wellenstummel 63 eine Pleuelstange 65 gelagert. Das andere Ende der Pleuelstange 65 greift am Zentralgetriebe 25 an einem Lagerzapfen 67 an. Der Lagerzapfen 67 ragt stirnseitig aus dem Zentralgetriebe 25 heraus und ist exzentrisch zur Achse B des Zentralgetriebes 25 mit diesem verbunden.

Durch die Schwenkbewegungen des Betätigungshebels 43 in X-Richtung kann folglich über die Pleuelstange 65 eine Drehbewegung auf den Eingang des Zentralgetriebes 25 erreicht werden. Die Schwenkbewegungen in Z-Richtung des Betätigungshebels 43 beeinflussen die Bewegungsabläufe des Pleuels 65 folglich nicht. In gleicher Weise erfolgt der Übertrieb der Bewegungen des Betätigungshebels 43 auf der anderen Seite des Fahrgestells 17 an das Zentralgetriebe 25. Betätigungshebel auf der linken Seite des Trainingsgeräts 1 nicht dargestellt.

Die auf das Zentralgetriebe 25 übertragene Drehbewegung wird von diesem an das zweite Kettenrad 13 übertragen. Dies kann durch eine nicht dargestellte Kette oder einen Antriebsriemen erfolgen.

Die Momentübertragung von der Pleuelstange 65 auf das Zentralgetriebe 25 erfolgt unter Zwischenschaltung eines Freilaufs im äusseren Gehäuseteil 69 des Zentralgetriebes 25. Dies erlaubt es, dass einerseits bei der Betätigung des Trainingsgeräts 1 mit den Pedalen 33, das heisst mit dem Beinantrieb, die Betätigungshebel 43 nicht auch in Bewegung gesetzt werden. Auf der anderen Seite ist auch das Kettenrad 27, auf welchem die Kette bzw. der Riemen 37 vom Beinantrieb umläuft, auf einem Freilauf gelagert, um zu vermeiden, dass bei reinem Armbetrieb die Pedale 33 mitrotieren. Andererseits ist es jedoch ohne Weiteres möglich, sowohl mit dem Beinantrieb als auch mit einem oder beiden Armantriebe gleichzeitig den Antrieb des Hinterrads 5 zu betätigen, also miteinander zu wirken.

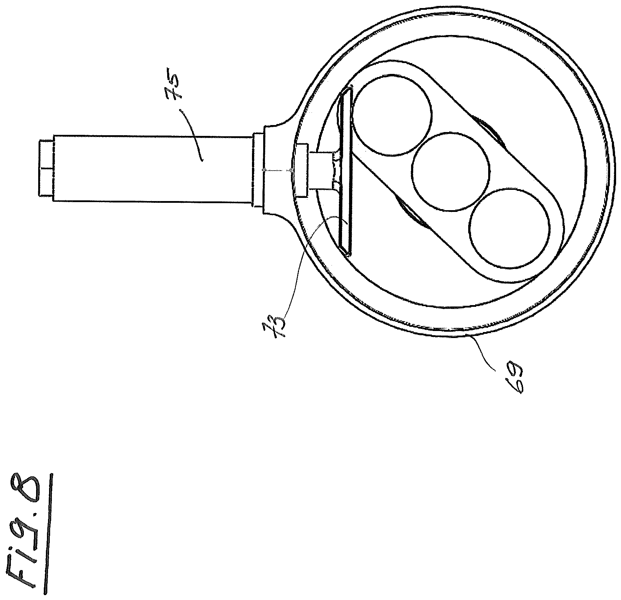

Um bei einem temporären Stillstand der beiden Betätigungshebel 43 zu vermeiden, dass einer oder beide in einem der beiden Totpunkte des Kurbelantriebs angehalten wird bzw. werden, das heisst, wenn die Achse der Lagerzapfen 67, die Drehachse B des Zentralgetriebes 25 sowie die Achse des Wellenstummels 63 am oberen Ende des Pleuels 65 in einer Linie liegen, blockieren, ist im Gehäuseteil 69 mit dem Freilauf gemäss Figur 8 eine gefedert gelagerte Abweisplatte 73 angeordnet, welche durch eine Feder in einem Federgehäuse 75 verhindert, dass die Pleuelstangen 65 auf den drei vorgenannten Achsen in einer Linie zum Stillstand kommen können. Durch den Freilauf, dessen Aufbau hier nicht näher beschrieben wird, kann die Lage des Pleuels 65 bzw. dessen Lagerzapfen immer um einige Winkelgrade aus der Totpunktlage herausgeführt werden.

Durch die freie Beweglichkeit der beiden Betätigungshebel 43, einerseits in Richtung der Pfeile X und andererseits in Richtung der Pfeile Z, kann nicht vermieden werden, dass beim Arm- oder Handantrieb durch Vorwärtsdrücken und Zurückziehen der Betätigungshebel 43 diese gleichzeitig auch leicht in Richtung Z bewegt werden. Eine auch noch so geringe unvermeidbare Schwenkbewegung führt dazu, dass kein exakter Geradelauf der Vorderräder 7 möglich ist, wenn eine direkte Verbindung des Befestigungshebels 43 und des Lenkgetriebes 61 erfolgt. Um dies zu verhindern bzw. um einen im Wesentlichen ungestörten Geradelauf der Vorderräder 7 zu erzielen, ist am Fahrgestell 17 das Lenkgetriebe 61 derart ausgebildet, dass kleine axiale Bewegungen der Betätigungsstangen 59 keinen spürbaren Einfluss haben auf die Spurstangen 71, mit welchen die Vorderräder 7 gelenkt werden.

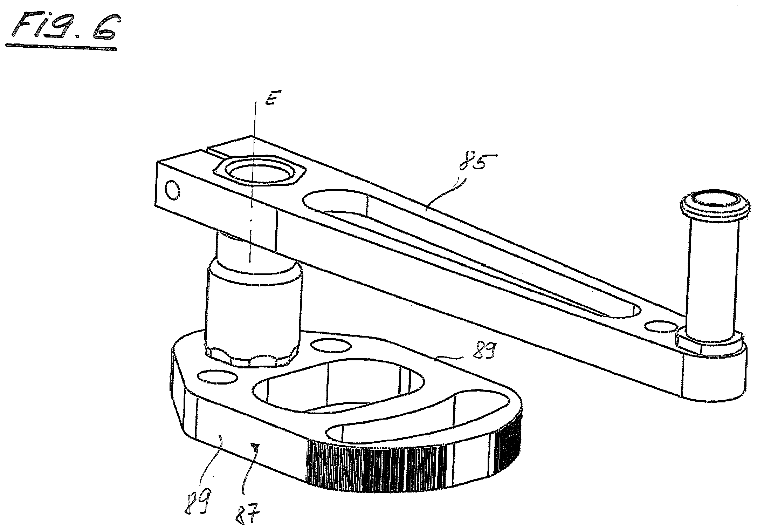

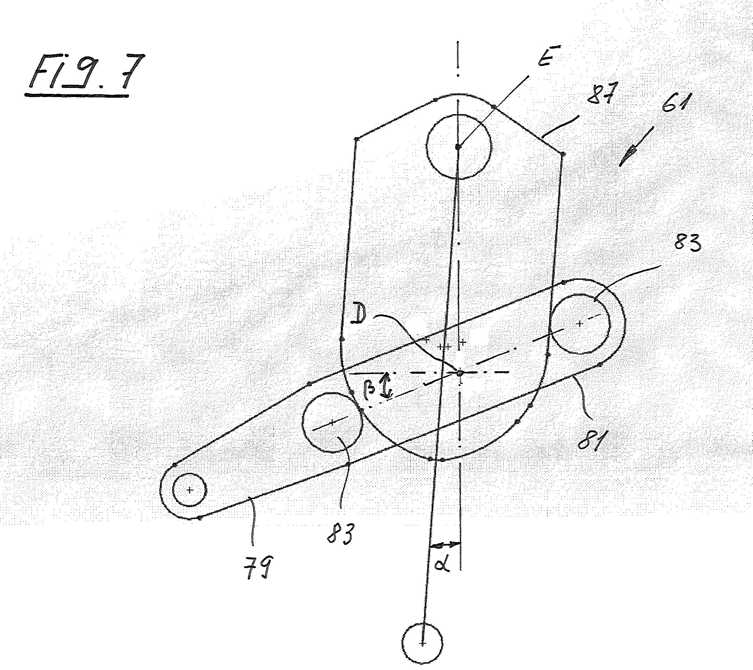

Das Lenkgetriebe 61, vorzugsweise in einem Gehäuse 77 untergebracht, weist folgenden Aufbau auf (Fig. 4-7). Die beiden Betätigungsstangen 59, welche durch die Betätigungshebel 43 im Wesentlichen axial bewegt werden, greifen an einem einarmigen Übertraghebel 79 an. Der Übertragungshebel 79 ist auf einer Achse D im Gehäuse 77 schwenkbar gelagert. Drehfest verbunden mit dem Übertragungshebel 79 ist ein zweiarmiger Führungshebel 81, an dessen Enden je eine Führungsrolle 83 drehbar gelagert ist. Die beiden Führungsrollen 83 sind an der Unterseite des Führungshebels 81 fliegend gehalten. Im Gehäuse 77 ist weiter ein einarmiger Lenkerhebel 85 um eine Achse E schwenkbar gelagert. Beabstandet zum Lenkerhebel 85 liegt eine Kurvenplatte 87. Diese ist drehfest mit dem Lenkerhebel 85 verbunden. Aus den Figuren 4 und 7 ist ersichtlich, dass die beiden Führungsrollen 83 seitlich an den Führungsflächen 89 anliegen und dort abrollen können. Bei Geradeausfahrt liegen die beiden Führungsrollen 83 in einer Linie, die rechtwinklig zum Lenkhebel 85 liegt. Erfolgt nun eine unvermeidbare, von den Betätigungshebeln 43 herrührende Auslenkung des Übertragungshebels 79 um einen Winkel β, so gleiten bzw. rollen die beiden Führungsrollen 83 auf einem kurzen Bogenbereich, der annähernd parallel zur Längsachse L des Lenkhebels 85 verläuft. Mit anderen Worten, der Lenkhebel 85 wird nur geringfügig um einen Winkel α durch die auf ihn wirkenden Kräfte ausgelenkt und die Auslenkung der Räder 7 ist folglich nur minimal. Sind die Abrollkanten 89 ebenfalls bogenförmig ausgebildet wie der Verlauf der Führungsrollen 83 beim Schwenken, so kann eine Bewegung des Übertragungshebels 79 sogar ohne Auswirkung auf den Lenkerhebel 85 bleiben. Die beiden vorderen Räder 7 bleiben demzufolge unberührt von der leichten Querbewegung der beiden Betätigungshebeln 43. Erfolgt nun eine gewollte Auslenkung der Betätigungshebel 43 um einen grösseren Winkel, um eine Kurve zu fahren, so wird der Winkel β, mit welchem die Führungsrollen 83 auf die Abrollkanten 89 auftreffen immer grösser und folglich die Auslenkung der Kurvenplatte 87 mit dem fest daran angeordneten Lenkerhebel 85 progressiv grösser. Ab diesem Bereich, in dem eine der beiden Führungsrollen 83, nämlich die nach vorne fahrende (in Figur 4 die Rolle 83 auf der linken Seite), eine gewisse Abrollstrecke auf der Abrollkante 89 zurückgelegt hat, wird deren Verlauf bogenförmig nach innen geführt, derart, dass nur noch die gegenüberliegende Führungsrolle auf die Abrollkante 89 (auf der rechten Seite) in immer stumpferem Winkel drückt und so progressiv den Lenkerhebel 85 zur Seite bewegt.

Die Figur 7 zeigt schematisch die Funktionsweise des Lenkgetriebes 61. Ersichtlich ist insbesondere, dass die Auslenkung der Kurvenplatte 87, mit welcher die Spurstangen 71 betätigt werden, erst ausgelenkt wird, wenn beim Übertragungshebel 79 bereits eine Auslenkung β erfolgt ist, welche drei- bis viermal so gross ist wie die Auslenkung α der Kurvenplatte 87. Je mehr der Übertragungshebel nun ausgelenkt wird, umso rascher und mit grösserer Übersetzung wird dann auch die Kurvenplatte 87 mit dem Lenkerhebel 85 umso mehr ausgelenkt. Kleine Auslenkungen des Übertragungshebels, welcher in Verbindung mit den Betätigungsstangen 43 steht, werden also kaum auf die Räder 7 übertragen.

Die Verbindung zwischen dem Lenkerhebel 85 und den beiden vorderen Laufrädern 7 ist teilweise in Figur 2 dargestellt. Auf der oberen rechten Seite der Abbildung ist ein Verbindungslenker 91 sichtbar, welcher, verbunden durch ein Kreuzgelenk 93, und daran anschliessend die Spurstange 71 mit dem Lenkerhebel 85 verbunden ist. Der Verbindungslenker 91 ist fest mit der Achse, welche das Vorderrad 7 trägt, verbunden.

## Patentansprüche

1. Fahrbares Trainingsgerät (1) für die körperliche Ertüchtigung der Arm-, Bein- und Bauchmuskulatur, umfassend ein Fahrgestell (17) mit einem hinteren Laufrad (5) und mit zwei vorderen Laufrädern (7), ein Tretlager (31) mit Pedalen (33) für den Antrieb des hinteren Laufrads (5) mit den Beinen und zwei Betätigungshebel (43) für den Antrieb des hinteren Laufrads (5) mit den Armen sowie zum Lenken der vorderen Laufräder (7) und Lenkmittel zum Einschlagen der vorderen Laufräder (7) mit mindestens einem der Betätigungshebel (43), wobei
als Lenkmittel mindestens einer der Betätigungshebel (43) für den Antrieb mit den Armen mit einem Lenkgetriebe (61) verbunden ist, welches mit Spurstangen (71) an den lenkbaren vorderen Laufrädern (7) verbunden ist, wobei beide Betätigungshebel (43) an ihren unteren Enden je ein erstes Gelenk (57) umfassen, welches mit Betätigungsstangen (59) mit dem Lenkgetriebe (61) verbunden ist und dass die Betätigungshebel (43) im Abstand zum unteren Ende in einer Lagerbüchse (55) schwenkbar und in dieser auf einer Schwenkwelle (53) schwenkbar gelagert sind und dass die Schwenkwelle (53) ihrerseits in einem schwenkbaren Bügel (49) schwenkbar am Fahrgestell (17) angelenkt ist, wobei der Bügel (49) am oberen Ende eines Schwenkhebels (45) befestigt ist und dass der Schwenkhebel (45) am unteren Ende am Fahrgestell (17) angelenkt ist, **dadurch gekennzeichnet, dass** am oberen Ende des Schwenkhebels (45) das antriebsseitige Ende einer Pleuelstange (65) angelenkt ist und dass das abtriebsseitige Ende der Pleuelstange (65) mit einem exzentrisch angeordneten Lagerzapfen (67) an einem am Fahrgestell (17) angeordneten Zentralgetriebe (25) für den Antrieb mindestens eines Laufrades (5) befestigt ist.

2. Trainingsgerät nach Anspruch 1, **dadurch gekennzeichnet, dass** der Lagerzapfen (67) mit einem Freilauf am Zentralgetriebe (25) verbunden ist.

3. Trainingsgerät nach Anspruch 2, **dadurch gekennzeichnet, dass** am Freilauf oder im Zentralgetriebe (25) Mittel zur Überwindung oder Überbrückung des Totpunktes der Pleuelstange (65) eingesetzt sind.

4. Trainingsgerät nach einem der Ansprüche 2 oder 3, **dadurch gekennzeichnet, dass** am Zentralgetriebe (25) oder in einem der Laufräder (5,7) ein Elektromotor (15) als Hilfsantrieb angebracht ist.

5. Fahrbares Trainingsgerät (1) nach einem der Ansprüche 1 bis 4, **dadurch gekennzeichnet, dass** das Lenkgetriebe (61) ein Gehäuse (77) umfasst, in welchem eine Kurvenplatte (87) drehfest mit einem Lenkerhebel (85) verbunden ist und dass die Kurvenplatte (87) und der Lenkerhebel (85) um eine gemeinsame Schwenkachse (E) schwenkbar am Gehäuse (77) gelagert sind, dass weiter im Gehäuse (77) ein Übertragungshebel (79) auf einer Achse (D) schwenkbar gelagert und drehfest mit einem Führungshebel (81) verbunden ist und dass an den Enden des zweiarmigen Führungshebels (81) je eine Führungsrolle (83) angeordnet ist.

6. Trainingsgerät nach Anspruch 5, **dadurch gekennzeichnet, dass** die Laufflächen der Führungsrollen (83) an seitlich an der Kurvenplatte (87) ausgebildeten Abrollkanten (89) abrollbar sind.

7. Trainingsgerät nach Anspruch 6, **dadurch gekennzeichnet, dass** die Abrollkanten (89) bogenförmig verlaufend ausgebildet sind und dass der Abstand zwischen den Kantenbereichen, auf denen die beiden Führungsrollen (83) die Kantenbereiche kontaktieren, konstant ist.

## Claims

1. A mobile training device (1) for the physical exercise of the muscles in the arms, legs and abdomen, comprising a chassis (17) with a rear wheel (5) and two front wheels (7), a bottom bracket (31) with pedals (33) for driving the rear wheel (5) using the legs and two actuating levers (43) for driving the rear wheel (5) using the arms and for steering the front wheels (7), and steering means for turning the front wheels (7) using at least one of the actuating levers (43), wherein
as steering means, at least one of the actuating levers (43) for driving using the arms is connected to a steering mechanism (61) which is connected to tie rods (71) on the steerable front wheels (7), both actuating levers (43) each comprising a first joint (57) at their lower ends, said joint being connected to the steering mechanism (61) by actuating rods (59), and the actuating levers (43) being mounted, at a distance from the lower end, so as to be pivotable in a bearing sleeve (55) and so as to be pivotable in said sleeve on a pivot shaft (53), and the pivot shaft (53) in turn being articulated to the chassis (17) so as to be pivotable in a pivotable bracket (49), the bracket (49) being fastened to the upper end of a pivot lever (45), and the pivot lever (45) being articulated to the chassis (17) at the lower end, **characterized in that** the drive-side end of a connecting rod (65) is articulated to the upper end of the pivot lever (45), and **in that** the output-side end of the connecting rod (65) is fastened to a central transmission (25) arranged on the chassis (17) for driving at least one wheel (5) by means of an eccentrically arranged bearing journal (67).

2. The training device according to Claim 1, **characterized in that** the bearing journal (67) is connected to a freewheel on the central transmission (25).

3. The training device according to Claim 2, **characterized in that** means for overcoming or bypassing the dead center of the connecting rod (65) are used on the freewheel or in the central transmission (25).

4. The training device according to any one of Claims 2 or 3, **characterized in that** an electric motor (15) in the form of an auxiliary drive is attached to the central transmission (25) or in one of the wheels (5, 7).

5. The mobile training device (1) according to any one of Claims 1 to 4, **characterized in that** the steering mechanism (61) comprises a housing (77) in which a cam plate (87) is connected to a steering lever (85) for conjoint rotation, and **in that** the cam plate (87) and the steering lever (85) are mounted on the housing (77) so as to be pivotable about a common pivot axis (E), **in that** a transmission lever (79) is also mounted in the housing (77) so as to be pivotable on an axis (D) and is connected to a guide lever (81) for conjoint rotation, and **in that** a guide roller (83) is arranged on each of the ends of the two-armed guide lever (81).

6. The training device according to Claim 5, **characterized in that** the running surfaces of the guide rollers (83) are rollable on rolling edges (89) formed on the sides of the cam plate (87).

7. The training device according to Claim 6, **characterized in that** the rolling edges (89) extend in a curved shape, and **in that** the distance between the edge regions at which the two guide rollers (83) contact the edge regions is constant.

## Revendications

1. Appareil d'entraînement mobile (1) pour le renforcement corporel des muscles de l'abdomen, des jambes et des bras, comprenant un châssis (17) doté d'une roue de roulement arrière (5) et de deux roues de roulement avant (7), un pédalier (31) doté de pédales (33) destiné à l'entraînement de la roue de roulement arrière (5) avec les jambes et deux leviers de commande (43) destinés à l'entraînement de la roue de roulement arrière (5) avec les bras ainsi que servant au guidage des deux roues de roulement avant (7) et des moyens de guidage servant au braquage des roues de roulement avant (7) avec au moins l'un des leviers de commande (43), dans lequel au moins l'un des leviers de commande (43) destinés à l'entraînement avec les bras est relié comme moyen de guidage à un mécanisme de direction (61), lequel est relié aux roues de roulement avant orientables (7) par des barres d'accouplement (71), dans lequel les deux leviers de commande (43) comprennent respectivement une première articulation (57) à leurs extrémités inférieures, laquelle est reliée au mécanisme de direction (61) par des tiges de commande (59) et où les leviers de commande (43) sont montés dans un coussinet (55) à distance de l'extrémité inférieure de façon à pouvoir pivoter et à l'intérieur de celui-ci sur un arbre oscillant (53) de façon à pouvoir pivoter et où l'arbre oscillant (53) est articulé de son côté au châssis (17) dans un étrier orientable (49) de façon à pouvoir pivoter, dans lequel l'étrier (49) est fixé à l'extrémité supérieure d'un levier pivotant (45) et où le levier pivotant (45) est articulé au châssis (17) à l'extrémité inférieure, **caractérisé en ce que** l'extrémité d'une bielle (65) située du côté de l'entraînement est articulée à l'extrémité supérieure du levier pivotant (45) et que l'extrémité de la bielle (65) située du côté de la prise de mouvement est fixée par un tourillon disposé de façon excentrique (67) à une transmission centrale (25) disposée sur le châssis (17), destinée à l'entraînement d'au moins une roue de roulement (5).

2. Appareil d'entraînement selon la revendication 1, **caractérisé en ce que** le tourillon (67) est relié à la transmission centrale (25) par une roue libre.

3. Appareil d'entraînement selon la revendication 2, **caractérisé en ce que** des moyens pour surmonter ou franchir le point mort de la bielle (65) sont installés sur la roue libre ou dans la transmission centrale (25).

4. Appareil d'entraînement selon l'une quelconque des revendications 2 ou 3, **caractérisé en ce qu'**un moteur électrique (15) est mis en place sur la transmission centrale (25) ou dans l'une des roues de roulement (5,7) comme entraînement auxiliaire.

5. Appareil d'entraînement mobile (1) selon l'une quelconque des revendications 1 à 4, **caractérisé en ce que** le mécanisme de direction (61) comprend un boîtier (77), dans lequel une plaque à came (87) est reliée solidairement en rotation à un levier de direction (85) et que la plaque à came (87) et levier de direction (85) sont montés sur le boîtier (77) autour d'un axe de pivotement commun (E) de façon à pouvoir pivoter, qu'un levier de transmission (79) est encore monté dans le boîtier (77) sur un axe (D) de façon à pouvoir pivoter et est relié solidairement en rotation à un levier de guidage (81) et qu'un galet de guidage (83) est disposé respectivement aux extrémités du levier de guidage à deux bras (81).

6. Appareil d'entraînement selon la revendication 5, **caractérisé en ce que** les surfaces de roulement des galets de guidage (83) peuvent rouler contre les chants de roulement (89) formés latéralement sur la plaque à came (87).

7. Appareil d'entraînement selon la revendication 6, **caractérisé en ce que** les chants de roulement (89) sont conçus de manière à s'étendre sous une forme incurvée et que la distance est constante entre les zones de chant, sur lesquelles les deux galets de guidage (83) sont mis en contact.
